# EUROPÄISCHE PATENTSCHRIFT

(11) **EP 3 820 145 B1**
(45) Veröffentlichungstag und Bekanntmachung des Hinweises auf die Patenterteilung: **20.10.2021**
(21) Anmeldenummer: 19208295.6
(22) Anmeldetag: 11.11.2019
(51) Int. Cl.: H04N 7/18

(54) **TÜRKOMMUNIKATIONSANLAGE MIT EINER EINE KAMERA AUFWEISENDEN TÜRSTATION**
DOOR COMMUNICATION SYSTEM WITH A DOOR STATION COMPRISING A CAMERA
SYSTEME DE COMMUNICATION DE PORTE AVEC UNE STATION DE PORTE COMPORTANT UNE CAMÉRA

(43) Veröffentlichungstag der Anmeldung: 12.05.2021
(73) Patentinhaber: GIRA GIERSIEPEN GmbH & Co. KG, 42477 Radevormwald (DE)
(72) Erfinder: Schimmelpfennig, Frank, 42477 Radevormwald (DE); Schieffer, Klaus, 51375 Leverkusen (DE)
(74) Vertreter: Angerhausen, Christoph

(56) Entgegenhaltungen:
- CN-U- 207 184 703
- US-A- 5 815 199
- US-A1- 2006 232 701
- US-A1- 2012 007 939
- US-A1- 2014 176 663

## Beschreibung

Die Erfindung geht aus von einer Türkommunikationsanlage mit einer Türstation, die eine Kamera zur Erzeugung eines Bildes eines im Sichtfeld der Kamera angeordneten Objektes aufweist, wobei die Kamera weiterhin eine Erfassungseinrichtung zur Erfassung einer geometrischen Eigenschaft eines im Sichtfeld der Kamera angeordneten Objektes und/oder zur Erfassung einer relativen Anordnung eines im Sichtfeld der Kamera angeordneten Objektes in Bezug auf die Türstation aufweist. Eine derartige Türkommunikationsanlage ist beispielsweise aus der US 5,815,199 A bekannt. Weitere Türkommunikationsanlagen sind außerdem bekannt aus der US 2014/176663 A1 oder der CN 207 184 703 U. Eine weitere Türkommunikationsanlage ist bekannt aus der DE 196 03 094 C2 bekannt. Bei dieser weist die Türstation mehrere Kamerasysteme auf, wodurch die Erstinstallation der Türstation erleichtert werden soll. Die CN 108694765 A beschreibt die Personenerkennung in Zutrittskontrollsystemen.

Die Kameras der Türstationen von Türkommunikationsanlagen weisen im Allgemeinen einen CCD- oder CMOS-Sensor auf, welche je nach Umgebungsbedingungen keine optimal erkennbaren Aufnahmen erzeugen können und insbesondere nicht dazu vorbereitet sind, nicht relevante Bereiche des Sichtfeldes der Kamera unkenntlich zu machen, was zu datenschutzrechtlichen Problemen führen kann und auch der Erkennbarkeit des relevanten Bereiches im Sichtfeld der Kamera mitunter nachteilig entgegenwirkt.

Es ist daher die Aufgabe der Erfindung, eine Türkommunikationsanlage der eingangs beschriebenen Art derart weiterzuentwickeln, bei der die mit der Kamera der Türstation erzeugten Bilder eine hohe Abbildungsqualität aufweisen und die im übrigen die Einhaltung datenschutzrechtlicher Voraussetzungen erlaubt.

Diese Aufgabe wird durch eine Türkommunikationsanlage mit den Merkmalen des Anspruchs 1 gelöst. Die abhängigen Ansprüche betreffen jeweils vorteilhafte Ausführungsformen der Erfindung.

Demgemäß ist vorgesehen, dass Türstation eine Objekt- oder Personenerkennung aufweist, welche dazu eingerichtet ist, abhängig von der erfassten geometrischen Eigenschaft und/oder der relativen Anordnung die nicht als dem Objekt oder der Person zugehörig erkannten Bildbereiche des von der Kamera aufgenommenen Bilds zu verunschärfen oder zu maskieren, und wobei die Objekt- oder Personenerkennung dazu eingerichtet ist, bei mehreren im Bildfeld der Kamera erkannten Objekten oder Personen alle erkannten Objekte oder Personen bis auf diejenige dieser Personen oder dasjenige dieser Objekte, die/das als nächstliegend zur Kamera angeordnet erkannt worden ist, zu verunschärfen oder zu maskieren, und wobei die Erkennung der nächstliegend zur Kamera angeordneten Person oder des nächstliegend zur Kamera angeordneten Objekts über eine geometrische Vermessung erfolgt, wobei diejenige Person oder dasjenige Objekt, die/das im Vergleich zu den übrigen Personen oder Objekten den größten Flächenanteil des Bildfeldes der Kamera einnimmt, als die nächstliegend zur Kamera angeordnete Person oder das nächstliegend zur Kamera angeordnete Objekt erkannt ist.

Es kann vorgesehen sein, dass die Erfassungseinrichtung einen Abstandssensor aufweist und dazu eingerichtet ist, abhängig von einem mit dem Abstandssensor gemessenen Abstand, einen Fokus der Kamera auf den gemessenen Abstand einzustellen. Die Erfassungseinrichtung kann dazu eingerichtet sein, bei mehreren erfassten Objekten im Sichtfeld der Kamera den Fokus auf dasjenige Objekt zu legen, das in Bezug auf die Kamera das nächstliegende Objekt ist.

Darüber hinaus kann die Erfassungseinrichtung dazu eingerichtet sein, einen Blenden- und/oder einen Belichtungswert der Kamera derart einzustellen, dass außerhalb des Fokus der Kamera angeordnete Objekte eine hohe Unschärfe aufweisen. Beispielsweise kann die Kamera ein Objektiv mit einer einstellbaren Blende aufweisen, welche die Einstellung der Schärfentiefe des erzeugten Bildes erlaubt. Beispielsweise kann die Kamera ein Objektiv mit einer besonders hohen Lichtstärke bzw. mit einem niedrigen Offenblendenwert aufweisen. Beispielsweise kann der Offenblendenwert zwischen 1,0 und 2,0 betragen und die Brennweite des Objektives, bezogen auf das Kleinbildformat, 24 bis 50 mm, vorzugsweise 30 bis 40 mm.

Die Türkommunikationsanlage kann eine Wohnungsstation mit einer Eingabevorrichtung zur Ansteuerung der Kamera aufweisen, über die ein Fokus der Kamera und/oder eine Maskierung, etwa eine Unscharfmaskierung, des Bildes auswählbar und/oder variierbar ist.

Über die Eingabevorrichtung kann ein Bildbereich im Sichtfeld der Kamera auswählbar sein, der von der Kamera scharf abgebildet werden soll, während übrige Bildbereiche im Sichtfeld der Kamera unscharf abgebildet sind. Das Auswählen des Bildbereiches kann das Fokussieren der Kamera auf ein Objekt in dem betreffenden Bildbereich umfassen. Das Auswählen des Bildbereiches kann weiterhin aufweisen, dass die übrigen Bildbereiche unscharf maskiert werden. Das Sichtfeld der Kamera kann rasterförmig in unabhängig voneinander auswählbare Bildbereiche unterteilt sein, wobei durch Unscharfmaskierung der übrigen Bildbereiche nur der ausgewählte Bildbereich scharf abgebildet ist.

Vorzugsweise weist die Kamera der Türstation ein Multifokalsystem auf, welches dazu eingerichtet ist, Bildinhalte in unterschiedlichen Distanzen zur Kamera der Türstation gleichzeitig und in voller Schärfe aufzunehmen und ggf. darzustellen. Es können somit gleichzeitig Objekte scharf abgebildet werden, die sich sehr nahe vor der Kamera befinden, als auch solche Objekte, die in größerer Entfernung zur Kamera angeordnet sind.

Die Kamera kann dazu eine Bifokalkamera mit einer ersten und einer von der ersten abweichenden zweiten Brennweite sein. Alternativ oder zusätzlich kann die Kamera ein Kameraarray aufweisen, das mindestens zwei Einzelkameras unterschiedlicher Festbrennweite und/oder mindestens zwei Einzelkameras unterschiedlicher Bildfelder aufweist.

Eine Wohnungsstation der Türkommunikationsanlage kann mit einer Eingabevorrichtung zur Ansteuerung der Bifokalkamera oder des Kameraarrays ausgestattet sein. Über die Eingabevorrichtung kann eine der Brennweiten der Bifokalkamera oder des Kameraarrays oder eines der Bildfelder des Kameraarrays ausgewählt werden.

Die Personenerkennung kann eine Wärmekamera mit einem mit dem Bildfeld der Kamera überlappenden Wärmebildfeld aufweisen. Dabei kann diejenige Person, deren Wärmebild im Vergleich zu den übrigen Personen im Bildfeld den größten Flächenanteil des Bildfeldes der Kamera einnimmt, als die nächstliegend zur Kamera angeordnete Person erkannt werden.

Gemäß einem anderen Aspekt der Erfindung wird ein Verfahren für den Betrieb einer Türkommunikationsanlage der zuvor beschriebenen Art beschrieben, das die Schritte aufweist:
- Herstellen einer Sprach-/Bildverbindung zwischen einer Türstation und einer Wohnungsstation der Türkommunikationsanlage, wozu von der Türstation ein Bild, vorzugsweise ein Video, eines im Sichtfeld der Kamera angeordneten Objekts oder einer Person erzeugt wird;
- Erkennen mehrerer Objekte oder Personen im Bildfeld der Kamera, von denen alle erkannten Objekte oder Personen bis auf dasjenige dieser Objekte oder diejenige dieser Personen, das/die als nächstliegend zur Kamera angeordnet erkannt worden ist, unscharf abgebildet wird, wobei das Erkennen der nächstliegend zur Kamera angeordneten Person oder des nächstliegend zur Kamera angeordneten Objekts durch geometrisches Vermessen erfolgt, wobei diejenige Person oder dasjenige Objekt, die/das im Vergleich zu den übrigen Personen oder Objekten, den größten Flächenanteil des Bildfeldes der Kamera einnimmt, als die nächstliegend zur Kamera angeordnete Person oder das nächstliegend zur Kamera angeordnete Objekt erkannt wird.

Das Verfahren kann weiterhin das Variieren eines Fokus der Kamera und/oder einer Unscharfmaskierung der Kamera aufweisen. Dazu kann über eine Eingabevorrichtung einer Wohnungsstation ein Bildbereich im Sichtfeld der Kamera auswählt werden, der von der Kamera scharf abgebildet werden soll, während übrige Bildbereiche im Sichtfeld der Kamera unscharf abgebildet werden.

Mit der Kamera können mehrere Bilder des Sichtfelds der Kamera bei unterschiedlichen Aufnahmeparametern erzeugt werden, beispielsweise mit unterschiedlicher Fokusebene und/oder unterschiedlicher Belichtung.

Dabei kann vorgesehen sein, dass die Bilder in einem Bildspeicher der Türkommunikationsanlage für den Zugriff über die Wohnungsstation als mindestens eine Bildreihe mit einer festen Reihenfolge hinterlegt werden. Dabei können jeweils zwei aufeinander folgende Bilder in der Bildreihe denselben Fokusabstand oder denselben Belichtungsunterscheid aufweisen. Auf diese Weise ist es möglich, dass beispielsweise von einem Benutzer über die Wohnungsstation aus der Bildreihe schrittweise das für ihn belichtungstechnisch oder schärfetechnisch beste Bild herausgesucht wird, um dem Benutzer eine optimale Erkennbarkeit beispielsweise einer Person zu schaffen, welche in seiner Abwesenheit über die Türstation einen Türruf ausgelöst hat.

Wie bereits oben angedeutet wurde, kann bei zumindest einer Ausführungsform der Erfindung mindestens eine Bifokalkamera oder ein Kameraarray aus mindestens zwei Kameras vorgesehen sein. Auf diese Weise ist es möglich, dass räumliche Aufnahmen erzeugt werden, die eine bessere Erkennbarkeit beispielsweise einer vor der Türstation stehenden Person erlauben. Durch die die Wohnungsstation der Türkommunikationsanlage bedienende Person kann eine Aufbereitung der Bildinhalte gesteuert werden, sofern diese nicht automatisiert erfolgt, wodurch nicht nur eine bessere Erkennbarkeit der vor der Türstation stehenden Person oder eines anderen Objekts bereitgestellt wird, sondern darüber hinaus auch aus datenschutzrechtlichen Gründen oder aus anderen Erwägungen irrelevante Bildinhalte ausgeblendet oder verfremdet werden können.

Die Ausführungsformen der erfindungsgemäßen Türkommunikationsanlage bieten daher eine Verbesserung der Sicherheit eines Objektbewohners durch eine Steigerung der Erkennbarkeit von vor der Türstation stehenden Besuchern und damit eine bessere Einschätzbarkeit, ob ein Besucher eingelassen oder ihm der Zutritt verwehrt werden sollte, bei gleichzeitiger Wahrung der Anforderungen des Datenschutzes, indem Aufnahmen des öffentlichen Raumes unterbunden werden können.

Alternativ oder zusätzlich kann vorgesehen sein, dass die Kamera der Türstation beispielsweise bei Abwesenheit des Objektinhabers nicht nur ein einzelnes Kamerabild einer Person aufnimmt, welche während seiner Abwesenheit beispielsweise einen Türruf ausgelöst hat, sondern in einem Speicher der Türkommunikationsanlage gleich mehrere Bilder, beispielsweise eine Bildsequenz von unmittelbar hintereinander, beispielsweise im Abstand weniger Millisekunden aufgenommener Bilder hinterlegt werden. Die Bilder der Bildersequenz können sich in mindestens einem Abbildungsparameter voneinander unterscheiden. Die Bilder können sich beispielsweise in ihrer Fokusebene oder in einem Blendenwert bzw. einem Belichtungswert unterscheiden. So kann vorgesehen sein, dass eine Bildsequenz mit durchlaufendem Fokus- und/oder Blendenwert aufgenommen und in dem Speicher als eine Bildserie mit variierender Belichtung und variierendem Fokus hinterlegt wird. Dadurch wird dem Objektinhaber bei Betrachtung der Bilder ermöglicht, durch eine Eingabe an der Wohnungsstation beispielsweise den Fokus und die Helligkeit des aufgenommenen Bildes zu verstellen, bis er nach seinem eigenen Ermessen ein optimal erkennbares Bild des Besuchers ausfindig machen konnte.

Es kann ebenso vorgesehen sein, im Falle einer Türstation, die eine Multifokalkamera aufweist, mit einer Objekt- oder Personenerkennung eine äußere Kontur des Objekts oder der Person zu ermitteln. Die Kontur kann beispielsweise eine Umrisskontur sein, so dass außerhalb des Umrisses liegende Bildinhalte unkenntlich gezeichnet werden, beispielsweise maskiert oder unscharf abgebildet werden. Dadurch wird erreicht, dass unbeabsichtigte Aufnahmen des öffentlichen Raums wirkungsvoll vermieden werden.

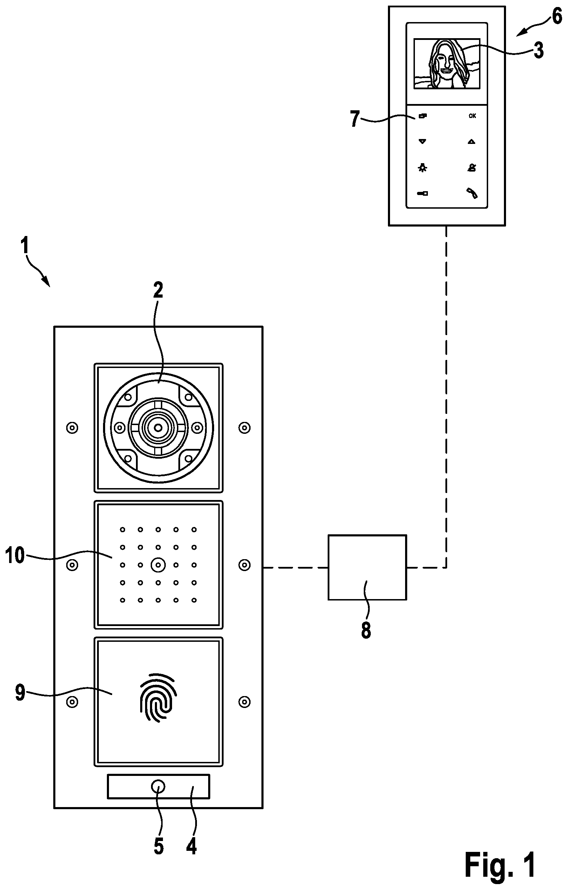

Weitere Einzelheiten der Erfindung werden anhand der nachstehenden Figur 1 beschrieben. Diese zeigt eine schematische Darstellung einer beispielhaften Ausführungsform einer erfindungsgemäßen Türkommunikationsanlage.

Die gezeigte Türkommunikationsanlage besteht im Wesentlichen aus einer Türstation 1 und einer Wohnungsstation 6. Diese können über eine Busleitung miteinander verbunden oder in ein Gebäudeautomationssystem drahtlos oder drahtgebunden integriert sein. In jedem Fall weisen die Türstation 1 und die Wohnungsstation 6 Zugriff auf einen Bildspeicher 8 auf, welcher beispielsweise Bestandteil der Wohnungsstation 6 sein kann. Es ist jedoch auch denkbar, dass der Bildspeicher als externe Einheit realisiert wird, beispielsweise in Form eines Servers eines KNX-Busnetzwerks.

Die Türstation 1 weist einen Fingerprintsensor 9, eine Mikrofon-Lautsprecher-Einheit 10 und eine Kamera 2 auf, mit Hilfe welcher Bilder von Objekten 3 im Sichtfeld der Kamera 2 aufgenommen werden können. Die Kamera 2 weist weiterhin eine Erfassungseinrichtung 4 auf, die dazu eingerichtet ist, mindestens eine geometrische Eigenschaft eines sich im Sichtfeld der Kamera 2 befindenden Objektes 3 bzw. einer Person zu erfassen. Die Erfassungseinrichtung 4 kann weiterhin dazu eingerichtet sein, eine relative Anordnung eines im Sichtfeld der Kamera 2 angeordneten Objekts 3 in Bezug auf die Türstation 1 aufzuweisen. Beispielsweise kann die Erfassungseinrichtung einen Abstandssensor aufweisen, welcher einen Abstand eines im Sichtfeld der Kamera 2 angeordneten Objekts 3 zur Türstation 1 aufweist, beispielsweise um einen Fokus eines Objektivs der Kamera 2 entsprechend einzustellen. Beispielsweise kann die Erfassungseinrichtung 4 ein Autofokussystem aufweisen, welches dazu eingerichtet ist, den Fokus auf ein Objekt 3 im Sichtfeld der Kamera 2 zu legen.

Die Kamera 2 kann weiterhin dazu eingerichtet sein, ausschließlich ein Bild zu erzeugen, welches eine geringe Schärfentiefe um die Fokusebene aufweist, um bereits insofern zu erreichen, dass diejenigen Bildteile im Sichtfeld der Kamera 2 unscharf abgebildet werden, die nicht das primär abzubildende Objekt betreffen. Es kann beispielsweise angenommen werden, dass eine abzubildende Person, selbst wenn sie nicht optimal zur Kamera 2 angeordnet ist, zumindest einen Großteil des Sichtfeldes der Kamera 2 einnimmt, mithin ein von der Kamera erfassbares Objekt im Nahbereich der Kamera darstellt, welches eine Fokusebene aufweist, die stark abweichend zu der jeweiligen Fokusebene sämtlicher anderer im Sichtfeld angeordneter Objekte ist.

Alternativ zu einer Erfassung einer geometrischen Eigenschaft eines sich im Sichtfeld der Kamera 2 angeordneten Objekts kann die Erfassungseinrichtung 4 dazu eingerichtet sein, eine relative Anordnung eines im Sichtfeld der Kamera 2 angeordneten Objekts in Bezug auf die Türstation 1 zu ermitteln. Erfindungsgemäß ist nunmehr vorgesehen, dass die Kamera 2 abhängig von der erfassten geometrischen Eigenschaft und/oder der relativen Anordnung diejenigen Bildteile im Sichtfeld der Kamera 2 unscharf abbildet oder maskiert, die nicht das Objekt betreffen.

Die Erfassungseinrichtung 4 weist einen Abstandssensor 5 auf, über den ein Abstand von dem Objekt zur Türstation gemessen und demgemäß ein Fokus der Kamera 2 auf den gemessenen Abstand eingestellt werden kann. Die Wohnungsstation 6 weist eine Eingabevorrichtung 7 auf, beispielsweise einen Taster oder einen Drehregler, über den der Fokus der Kamera 2 oder eine Maskierung des Bildes einstellbar ist. Die Eingabevorrichtung 7 kann auch dazu dienen, um zwischen den Einzelbildern einer in einem Speicher der Türkommunikationsanlage hinterlegten von der Kamera 2 aufgenommenen Bildreihe ein aus Sicht des Objektbesitzers optimales Bild auszuwählen, beispielsweise ein optimal belichtetes Bild aus einer Belichtungsreihe mehrerer Bilder oder ein Bild mit einer bevorzugten Schärfeebene aus einer Bilderreihe von Bildern unterschiedlicher Schärfeebene.

Die Kamera 2 ist vorzugsweise eine Bifokalkamera oder ein Kameraarray mit mindestens zwei Einzelkameras unterschiedlicher Festbrennweite. Über die zuvor beschriebene Eingabevorrichtung 7 kann beispielsweise die Bifokalkamera oder das Kameraarray angesteuert werden, etwa um eine Brennweite der Bifokalkamera oder des Kameraarrays oder eine bestimmte Kamera des Kameraarrays auszuwählen, welche ein gewünschtes Bildfeld abbildet.

Die Türkommunikationsanlage weist weiterhin eine Objekt- oder Personenerkennung auf, um diejenigen Bildbereiche aus dem Sichtfeld der Kamera 2 unkenntlich zu machen, beispielsweise durch Verunschärfen oder Maskieren, welche nicht dem Objekt oder der Person, das/die abgebildet werden soll, zugeordnet sind. Die Objekt- oder Personenerkennung kann Das Erkennen einer nächstliegend zu der Kamera angeordneten Person oder eines nächstliegend zur Kamera 2 angeordneten Objekts über eine geometrische Vermessung der Kamera bzw. der Person bzw. deren Abbildung im Sichtfeld umfassen. Dabei kann diejenige Person oder dasjenige Objekt, welche/welches im Vergleich zu den übrigen Personen oder Objekten den größten Flächenanteil des Bildfeldes der Kamera 2 einnimmt, als das abzubildende Objekt bzw. die abzubildende Person ermittelt werden.

Alternativ oder zusätzlich kann die Personenerkennung eine Wärmekamera aufweisen, bei der diejenige Person, deren Wärmebild im Vergleich zu übrigen Personen im Bildfeld den größten Flächenanteil des Bildfeldes der Kamera 2 einnimmt, als die nächstliegend zur Kamera 2 angeordnete Person und damit als die abzubildende Person erkannt wird.

### Bezugszeichenliste

- 1: Türstation
- 2: Kamera
- 3: Objekt
- 4: Erfassungseinrichtung
- 5: Abstandssensor
- 6: Wohnungsstation
- 7: Eingabevorrichtung
- 8: Bildspeicher
- 9: Fingerprintsensor
- 10: Lautsprecher/Mikrofon

## Patentansprüche

1. Türkommunikationsanlage mit einer Türstation (1), die eine Kamera (2) zur Erzeugung eines Bildes eines im Sichtfeld der Kamera (2) angeordneten Objektes (3) aufweist, wobei die Kamera (2) weiterhin eine Erfassungseinrichtung (4) zur Erfassung einer geometrischen Eigenschaft eines im Sichtfeld der Kamera (2) angeordneten Objektes (3) und/oder zur Erfassung einer relativen Anordnung eines im Sichtfeld der Kamera (2) angeordneten Objektes (3) in Bezug auf die Türstation (1) aufweist, **dadurch gekennzeichnet, dass** die Türstation (1) eine Objekt- oder Personenerkennung aufweist, welche dazu eingerichtet ist, abhängig von der erfassten geometrischen Eigenschaft und/oder der relativen Anordnung die nicht als dem Objekt oder der Person zugehörig erkannten Bildbereiche des von der Kamera (2) aufgenommenen Bilds zu verunschärfen oder zu maskieren, und wobei die Objekt- oder Personenerkennung dazu eingerichtet ist, bei mehreren im Bildfeld der Kamera (2) erkannten Objekten oder Personen alle erkannten Objekte oder Personen bis auf diejenige dieser Personen oder dasjenige dieser Objekte, die/das als nächstliegend zur Kamera (2) angeordnet erkannt worden ist, zu verunschärfen oder zu maskieren, und wobei die Erkennung der nächstliegend zur Kamera (2) angeordneten Person oder des nächstliegend zur Kamera (2) angeordneten Objekts über eine geometrische Vermessung erfolgt, wobei diejenige Person oder dasjenige Objekt, die/das im Vergleich zu den übrigen Personen oder Objekten den größten Flächenanteil des Bildfeldes der Kamera (2) einnimmt, als die nächstliegend zur Kamera (2) angeordnete Person oder das nächstliegend zur Kamera (2) angeordnete Objekt erkannt ist.

2. Türkommunikationsanlage nach Anspruch 1, bei der die Erfassungseinrichtung (4) einen Abstandssensor (5) aufweist und dazu eingerichtet ist, abhängig von einem mit dem Abstandssensor (5) gemessenen Abstand, einen Fokus der Kamera (2) auf den gemessenen Abstand einzustellen.

3. Türkommunikationsanlage nach Anspruch 1 oder 2, die eine Wohnungsstation (6) mit einer Eingabevorrichtung (7) zur Ansteuerung der Kamera (2) aufweist, über die ein Fokus der Kamera (2) und/oder eine Maskierung, etwa eine Unscharfmaskierung, des Bildes variierbar ist.

4. Türkommunikationsanlage nach Anspruch 3, bei der über die Eingabevorrichtung (7) ein Bildbereich im Sichtfeld der Kamera (2) auswählbar ist, der von der Kamera (2) scharf abgebildet werden soll, während übrige Bildbereiche im Sichtfeld der Kamera (2) unscharf abgebildet sind.

5. Türkommunikationsanlage nach einem der vorangegangen Ansprüche, bei der die Kamera (2) eine Bifokalkamera mit einer ersten und einer von der ersten abweichenden zweiten Brennweite oder ein Kameraarray aus mindestens zwei Einzelkameras unterschiedlicher Festbrennweite und/oder aus mindestens zwei Einzelkameras unterschiedlicher Bildfelder ist.

6. Türkommunikationsanlage nach Anspruch 5, die eine Wohnungsstation (6) mit einer Eingabevorrichtung (7) zur Ansteuerung der Bifokalkamera oder des Kameraarrays aufweist, wobei über die Eingabevorrichtung (7) eine der Brennweiten der Bifokalkamera oder des Kameraarrays oder eines der Bildfelder des Kameraarrays auswählbar ist.

7. Türkommunikationsanlage nach Anspruch 1, bei der die Personenerkennung eine Wärmekamera mit einem mit dem Bildfeld der Kamera (2) überlappenden Bildfeld aufweist, wobei diejenige Person, deren Wärmebild im Vergleich zu den übrigen Personen den größten Flächenanteil des Bildfeldes der Kamera (2) einnimmt, als die nächstliegend zur Kamera (2) angeordnete Person erkannt ist.

8. Verfahren für den Betrieb einer Türkommunikationsanlage nach einem der vorangegangenen Ansprüche, das die Schritte aufweist:
- Herstellen einer Sprach-/Bildverbindung zwischen einer Türstation (1) und einer Wohnungsstation (6) der Türkommunikationsanlage, wozu von der Türstation (1) ein Bild, vorzugsweise ein Video, eines im Sichtfeld der Kamera (2) angeordneten Objekts oder einer Person erzeugt wird;
**dadurch gekennzeichnet, dass**
- Erkennen mehrerer Objekte oder Personen im Bildfeld der Kamera (2), von denen alle erkannten Objekte oder Personen bis auf dasjenige dieser Objekte oder diejenige dieser Personen, das/die als nächstliegend zur Kamera (2) angeordnet erkannt worden ist, unscharf abgebildet wird, wobei das Erkennen der nächstliegend zur Kamera (2) angeordneten Person oder des nächstliegend zur Kamera (2) angeordneten Objekts durch geometrisches Vermessen erfolgt, wobei diejenige Person oder dasjenige Objekt, die/das im Vergleich zu den übrigen Personen oder Objekten, den größten Flächenanteil des Bildfeldes der Kamera (2) einnimmt, als die nächstliegend zur Kamera (2) angeordnete Person oder das nächstliegend zur Kamera (2) angeordnete Objekt erkannt wird.

9. Verfahren nach Anspruch 8, das weiterhin das Variieren eines Fokus der Kamera (2) und/oder einer Unscharfmaskierung der Kamera (2) aufweist, wozu über eine Eingabevorrichtung (7) einer Wohnungsstation (6) ein Bildbereich im Sichtfeld der Kamera (2) ausgewählt werden kann, der von der Kamera (2) scharf abgebildet werden soll, während übrige Bildbereiche im Sichtfeld der Kamera (2) unscharf abgebildet werden.

10. Verfahren nach einem der Ansprüche 8 oder 9, bei dem mit der Kamera (2) mehrere Bilder des Sichtfelds bei unterschiedlichen Aufnahmeparameters erzeugt werden, beispielsweise mit unterschiedlicher Fokusebene und/oder unterschiedlicher Belichtung.

11. Verfahren nach einem der Ansprüche 8 bis 10, bei dem die Bilder in einem Bildspeicher der Türkommunikationsanlage für den Zugriff über die Wohnungsstation (6) als mindestens eine Bildreihe mit einer festen Reihenfolge hinterlegt werden, wobei jeweils zwei aufeinander folgende Bilder in der Bildreihe denselben Fokusabstand oder denselben Belichtungsunterscheid aufweisen.

## Claims

1. A door communication system having a door station (1) which has a camera (2) for generating an image of an object (3) arranged in the field of view of the camera (2), the camera (2) furthermore having a detection device (4) for detecting a geometric property of an object (3) arranged in the field of view of the camera (2) and/or for detecting a relative arrangement of an object (3) arranged in the field of view of the camera (2) with respect to the door station (1), **characterised in that** the door station (1) has an object or person recognition system which is set up to blur or mask, depending on the detected geometric property and/or the relative arrangement, the image regions of the image recorded by the camera (2) which are not recognised as belonging to the object or person, and wherein the object or person recognition is arranged to blur or mask, in the case of a plurality of objects or persons recognised in the image field of the camera (2), all recognised objects or persons except that one of these persons or that one of these objects which has been recognised as being arranged closest to the camera (2), and wherein the recognition of the person or object arranged closest to the camera (2) is effected by means of a geometric measurement, wherein that person or object which, in comparison with the remaining persons or objects, occupies the largest proportion of the area of the image field of the camera (2) is recognised as the person or object arranged closest to the camera (2).

2. The door communication system according to claim 1, wherein the detection device (4) comprises a distance sensor (5) and is arranged to adjust a focus of the camera (2) to the measured distance depending on a distance measured with the distance sensor (5).

3. The door communication system according to claim 1 or 2, which has a home station (6) with an input device (7) for controlling the camera (2), via which a focus of the camera (2) and/or a masking, for example an unsharp masking, of the image can be varied.

4. The door communication system according to claim 3, in which an image area in the field of view of the camera (2) can be selected via the input device (7) which is to be imaged in focus by the camera (2), while other image areas in the field of view of the camera (2) are imaged out of focus.

5. The door communication system according to one of the preceding claims, in which the camera (2) is a bifocal camera with a first focal length and a second focal length which differs from the first focal length, or a camera array comprising at least two individual cameras of different fixed focal lengths and/or at least two individual cameras of different image fields.

6. The door communication system according to claim 5, which has a home station (6) with an input device (7) for controlling the bifocal camera or the camera array, it being possible to select one of the focal lengths of the bifocal camera or of the camera array or one of the image fields of the camera array via the input device (7).

7. The door communication system according to claim 1, wherein the person recognition comprises a thermal camera with a field of view overlapping with the field of view of the camera (2), wherein the person whose thermal image occupies the largest area proportion of the field of view of the camera (2) in comparison with the other persons is recognised as the person arranged closest to the camera (2).

8. A method for operating a door communication system according to any one of the preceding claims, comprising the steps of:
- Establishing a voice/video connection between a door station (1) and a home station (6) of the door communication system, for which purpose an image, preferably a video, of an object or person arranged in the field of view of the camera (2) is generated by the door station (1);
**characterized in**
- Recognizing of a plurality of objects or persons in the field of view of the camera (2), of which all the recognised objects or persons are imaged out of focus except for that one of these objects or persons which has been recognised as being arranged closest to the camera (2), the recognition of the person arranged closest to the camera (2) or of the object arranged closest to the camera (2) being effected by geometric measurement, wherein that person or that object which, in comparison with the other persons or objects, occupies the largest proportion of the area of the field of view of the camera (2) is recognised as the person or the object arranged closest to the camera (2).

9. The method according to claim 8, further comprising varying a focus of the camera (2) and/or an unsharp masking of the camera (2), for which purpose an input device (7) of a housing station (6) can be used to select an image area in the field of view of the camera (2) to be imaged in focus by the camera (2), while other image areas in the field of view of the camera (2) are imaged out of focus.

10. The method according to one of claims 8 or 9, wherein several images of the field of view are generated with the camera (2) at different recording parameters, for example with different focal plane and/or different exposure.

11. The method according to one of claims 8 to 10, in which the images are stored in an image memory of the door communication system for access via the home station (6) as at least one image series with a fixed sequence, wherein in each case two successive images in the image series have the same focus distance or the same exposure difference.

## Revendications

1. Installation de communication de porte avec une station de porte (1), qui comporte une caméra (2) destinée à produire une image d'un objet (3) disposé dans le champ visuel de la caméra (2), la caméra (2) présentant également un dispositif de détection (4) destiné à détecter une propriété géométrique d'un objet (3) disposé dans le champ visuel de la caméra (2) et/ou à détecter une disposition relative d'un objet (3) disposé dans le champ visuel de la caméra (2) par rapport à la station de porte (1), **caractérisée en ce que** la station de porte (1) comporte une identification d'objet ou de personne qui est agencée pour, en fonction de la propriété géométrique détectée et/ou de la disposition relative, flouter ou masquer les zones d'image de l'image captée par la caméra (2) qui ne sont pas identifiées comme appartenant à l'objet ou à la personne, et l'identification d'objet ou de personne étant agencée pour, en présence de plusieurs objets ou personnes identifié(e)s dans le champ d'image de la caméra (2), flouter ou masquer tous les objets ou toutes les personnes identifié(e)s sauf celle de ces personnes ou celui de ces objets qui a été identifié(e) comme étant disposé(e) le plus près de la caméra (2), et l'identification de la personne disposée le plus près de la caméra (2) ou de l'objet disposé le plus près de la caméra (2) s'effectuant par le biais d'un mesurage géométrique, la personne ou l'objet qui occupe la plus grande proportion de surface du champ d'image de la caméra (2) en comparaison avec les autres personnes ou objets étant identifié(e) comme étant la personne disposée le plus près de la caméra (2) ou l'objet disposé le plus près de la caméra (2).

2. Installation de communication de porte selon la revendication 1, dans laquelle le dispositif de détection (4) comporte un capteur de distance (5) et est agencé pour, en fonction d'une distance mesurée avec le capteur de distance (5), régler un point focal de la caméra (2) sur la distance mesurée.

3. Installation de communication de porte selon la revendication 1 ou 2, qui comporte une station d'habitation (6) avec un dispositif d'entrée (7) destiné à piloter la caméra (2) par le biais duquel il est possible de faire varier le point focal de la caméra (2) et/ou un masquage, par exemple un masquage floutant, de l'image.

4. Installation de communication de porte selon la revendication 3, dans laquelle, par le biais du dispositif d'entrée (7), il est possible de sélectionner dans le champ visuel de la caméra (2) une zone d'image qui doit être reproduite de façon nette par la caméra (2) tandis que les autres zones d'image dans le champ visuel de la caméra (2) sont reproduites de façon floue.

5. Installation de communication de porte selon l'une des revendications précédentes, dans laquelle la caméra (2) est une caméra bifocale avec une première focale et avec une deuxième focale différente de la première, ou un groupe de caméras composé d'au moins deux caméras individuelles ayant une focale fixe différente et/ou d'au moins deux caméras individuelles ayant des champs d'image différents.

6. Installation de communication de porte selon la revendication 5, qui comporte une station d'habitation (6) avec un dispositif d'entrée (7) destiné à piloter la caméra bifocale ou le groupe de caméras, une des focales de la caméra bifocale ou du groupe de caméras ou de l'un des champs d'image du groupe de caméras pouvant être sélectionnée par le biais du dispositif d'entrée (7).

7. Installation de communication de porte selon la revendication 1, dans laquelle l'identification de personne comporte une caméra thermique avec un champ d'image se chevauchant avec le champ d'image de la caméra (2), la personne dont l'image thermique occupe la plus grande proportion de surface du champ d'image de la caméra (2) en comparaison avec les autres personnes étant identifiée en tant que personne disposée le plus près de la caméra (2).

8. Procédé de fonctionnement d'une installation de communication de porte selon l'une des revendications précédentes, qui comporte les étapes suivantes :
- établissement d'une liaison vocale/vidéo entre une station de porte (1) et une station d'habitation (6) de l'installation de communication de porte, pour lequel une image, de préférence une vidéo, d'un objet ou d'une personne disposé(e) dans le champ visuel de la caméra (2) est produite par la station de porte (1) ;
**caractérisé en ce que**
- identification de plusieurs objets ou personnes dans le champ d'image de la caméra (2), dont tous les objets ou toutes les personnes identifié(s), sauf celui de ces objets ou celle de ces personnes qui a été identifié(e) comme étant disposé(e) le plus près de la caméra (2), sont reproduit(e)s façon floue, l'identification de la personne disposée le plus près de la caméra (2) ou de l'objet disposé le plus près de la caméra (2) s'effectuant par une mesure géométrique, la personne ou l'objet qui occupe la plus grande proportion de surface du champ d'image de la caméra (2) en comparaison avec les autres personnes ou objets étant identifié(e) comme la personne disposée le plus près de la caméra (2) ou l'objet disposé le plus près de la caméra (2).

9. Procédé selon la revendication 8, qui présente en outre la variation d'un point focal de la caméra (2) et/ou d'un masquage floutant de la caméra (2), pour lequel une zone d'image dans le champ visuel de la caméra (2) peut être sélectionnée par le biais d'un dispositif d'entrée (7) d'une station d'habitation (6), zone d'image qui doit être reproduite de façon nette par la caméra (2) tandis que les autres zones d'image dans le champ visuel de la caméra (2) sont représentées de façon floue.

10. Procédé selon l'une des revendications 8 ou 9, dans lequel plusieurs images du champ visuel en présence de différents paramètres de prise de vue sont produites avec la caméra (2), par exemple avec un plan focal différent et/ou avec une exposition différente.

11. Procédé selon l'une des revendications 8 à 10, dans lequel les images sont enregistrées dans une mémoire d'images de l'installation de communication de porte pour l'accès par le biais de la station d'habitation (6) en tant qu'au moins une série d'images avec un ordre de succession fixe, deux images consécutives dans la série d'images comportant respectivement la même distance focale ou la même différence d'exposition.
